# EUROPEAN PATENT APPLICATION

(11) **EP 4 675 995 A1**
(43) Date of publication of application: **07.01.2026**
(21) Application number: 23925346.1
(22) Date of filing: 25.08.2023
(51) Int. Cl.: H04L 45/243

(54) **COMMUNICATION APPARATUS AND COMMUNICATION METHOD**

(30) Priority: 28.02.2023 JP 2023029538
(71) Applicant: Hitachi, Ltd., Tokyo 100-8280 (JP)
(72) Inventor: SATO, Riku, Tokyo 100-8280 (JP); OHMI, Taishi, Tokyo 100-8280 (JP); NOMIZU, Takuma, Tokyo 100-8280 (JP); OGAWA, Masaaki, Tokyo 100-8280 (JP)
(74) Representative: MERH-IP Matias Erny Reichl Hoffmann Patentanwälte PartG mbB
(86) International application number: PCT/JP2023/030728
(87) International publication number: WO 2024/180792

(57) **Abstract**

Provided is a communication device capable of implementing packet redundancy while suppressing an increase in the number of devices. A processor executes an application to implement a communication application unit A101 that sends a packet A111 addressed to a terminal B. In addition, the processor executes the middleware to implement the redundancy control unit that generates the plurality of packets A112 respectively corresponding to the plurality of communication paths 1 to n to make the packet A111 sent from the application unit redundant and transmits the respective packets A112 to the terminal B via the plurality of communication paths 1 to n.

## Description

### Technical Field

The present disclosure relates to a communication device and a communication method.

### Background Art

Hitherto, server redundancy, packet redundancy, and the like have been implemented in the field of communications in order to achieve high network reliability. For example, PTL 1 discloses a communication system in which data is made redundant and transmitted to a plurality of networks between a transmission device and a reception device, and the pieces of redundant data are consolidated on a reception side.

### Citation List

### Patent Literature

PTL 1: JP 2015-097349 A

### Summary of Invention

### Technical Problem

In the technology described in PTL 1, the transmission device makes data from a processing device redundant, the processing device executing an application that transmits data. Therefore, the transmission device that functions as a data relay device is required separately from the processing device, as a result of which there is a problem that the number of devices increases. For this reason, it is difficult to ensure high reliability of communication used for remote work or the like of a device located in a place where it is difficult to install a relay device, such as a narrow place where a person cannot stand.

An object of the present disclosure is to provide a communication device and a communication method capable of implementing packet redundancy while suppressing an increase in the number of devices.

### Solution to Problem

A communication device according to one aspect of the present disclosure is a communication device communicably connected to an external device via a plurality of communication paths, the communication device including: a memory unit; and a processor, in which the memory unit records an application and middleware, the processor executes the application to implement an application unit that sends a packet addressed to the external device, and the processor executes the middleware to implement a redundancy control unit that generates a plurality of transmission packets respectively corresponding to the plurality of communication paths to make the packet sent from the application unit redundant and sends the respective transmission packets to the external device via the plurality of communication paths.

### Advantageous Effects of Invention

According to the present invention, it is possible to implement packet redundancy while suppressing an increase in the number of devices.

### Brief Description of Drawings

[FIG. 1] FIG. 1 is a diagram illustrating a communication system according to an embodiment of the present disclosure.
[FIG. 2] FIG. 2 is a diagram illustrating a configuration of a packet.
[FIG. 3] FIG. 3 is a flowchart for describing an example of path management processing.
[FIG. 4] FIG. 4 is a flowchart for describing an example of alive checking processing.
[FIG. 5] FIG. 5 is a diagram illustrating an example of a hardware configuration of a terminal.

### Description of Embodiments

Hereinafter, embodiments of the present disclosure will be described with reference to the drawings.

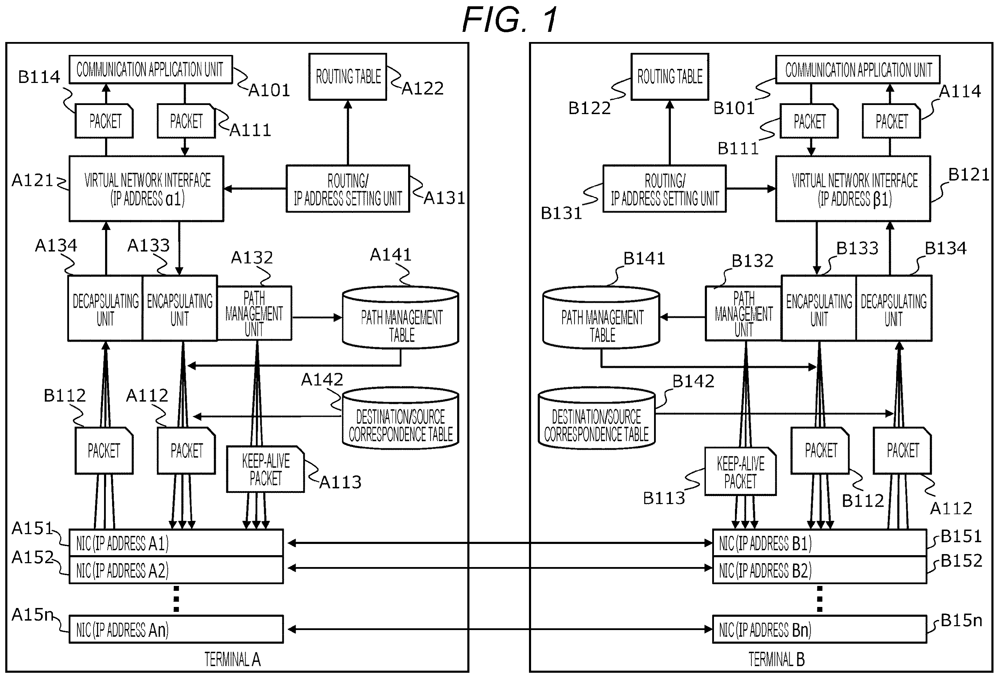

FIG. 1 is a diagram illustrating a communication system according to an embodiment of the present disclosure. The communication system illustrated in FIG. 1 includes terminals A and B which are communicably connected to each other via a plurality of communication paths 1 to n.

The terminal A includes a communication application unit A101, a virtual network interface A121, a routing/IP address setting unit A131, a path management unit A132, an encapsulating unit A133, a decapsulating unit A134, and a plurality of network interface cards (NIC) A151 to A15n. The terminal B has a configuration equivalent to that of the terminal A. Hereinafter, an element of the terminal B corresponding to an element related to the terminal A is assigned with a reference sign obtained by replacing a character "A" of a reference sign assigned to the element of the terminal A with "B". Therefore, for example, a communication application unit of the terminal B corresponding to the communication application unit A101 of the terminal A is assigned with a reference sign "B101". In addition, hereinafter, functions of the terminal A will be described, and functions of the terminal B are equivalent to those of the terminal A, and thus a description thereof will be appropriately omitted.

The NICs A151 to A15n are communication devices respectively corresponding to the plurality of communication paths 1 to n, and have different IP addresses. In the present embodiment, the NICs A151 to A15n have IP addresses A1 to An, respectively. n may be an integer of 2 or more. That is, the number of NICs and the number of communication paths are not limited as long as the number of NICs and the number of communication paths are plural. The NICs A151 to A15n transmit packets A112 described below to the terminal B and receive the packets A112 from the terminal B.

The communication application unit A101 is implemented by an application (application program) that performs data communication. The communication application unit A101 sends a packet A111 addressed to the terminal B which is an external device.

The virtual network interface A121 is a virtual NIC implemented by software, and has an IP address α1 as an IP address of a source of the packet A111.

The routing/IP address setting unit A131 is implemented by middleware, for example, and is a routing setting unit that manages intra-device routing of the terminal A. For example, the routing/IP address setting unit A131 allocates the IP address α1 to the virtual network interface A121 of the own terminal A in advance, and further sets, in a routing table A122, the IP address α1 of the virtual network interface A121 as a gateway for a network address of an IP address β1 of a virtual network interface B121 of the terminal B that is a communication partner. As a result, the routing/IP address setting unit A131 can route the packet A111 addressed to the terminal B (more specifically, addressed to the IP address β1 of the virtual network interface B121 of the terminal B) sent from the communication application unit A101 to the virtual network interface A121 of the own terminal A by the routing table A122.

The path management unit A132, the encapsulating unit A133, and the decapsulating unit A134 are implemented by middleware, and implement a redundancy control unit that makes the packet A111 sent from the communication application unit A101 redundant and transmits the packet A111 to the terminal B that is a destination of the packet A111.

The path management unit A132 checks whether or not each of the communication paths 1 to n is available, and adds the check result to a path management table A141. Specifically, the path management unit A132 periodically transmits a keep-alive packet A113 for checking availability of the communication paths 1 to n to the terminal B by using each of the communication paths 1 to n. In addition, the path management unit A132 checks whether or not the communication paths 1 to n are available based on a keep-alive packet B113 from the terminal B in each of the communication paths 1 to n. For example, in a case where the keep-alive packet B113 has been received within a certain period for each communication path, the path management unit A132 determines that the communication path is available, and in a case where the keep-alive packet B113 has not been received within the certain period, the path management unit A132 determines that the communication path is not in a communicable state. Then, the path management unit A132 sets the availability of each of the communication paths 1 to n as a path state in the path management table A141.

The path management table A141 is information indicating the path state of each communication path. In the present embodiment, the path state in the path management table A141 indicates "Up" in a case where the communication path is available, and indicates "Down" in a case where the communication path is unavailable.

The encapsulating unit A133 captures, from the virtual network interface A121, the packet A111 sent from the communication application unit A101 and routed to the virtual network interface A121. The encapsulating unit A133 specifies a terminal (here, the terminal B) that is the destination of the captured packet A111 by using a destination/source correspondence table A142. The destination/source correspondence table A142 is preset information and indicates a correspondence between the destination and the source of the packet A111.

In addition, the encapsulating unit A133 generates the packets A112 which are a plurality of transmission packets respectively corresponding to available paths which are available communication paths among the plurality of communication paths 1 to n to make the captured packet A111 redundant based on the path management table A141. Then, the encapsulating unit A133 transmits the packets A112 respectively corresponding to the available paths to the terminal B (specifically, an NIC corresponding to an available path among NICs B151 to B15n of the terminal B) via each NIC corresponding to the available path among the NICs A151 to A15n.

The redundancy of the packet A111 is implemented by adding a header corresponding to each of the communication paths 1 to n (specifically, the available paths) to the packet A111.

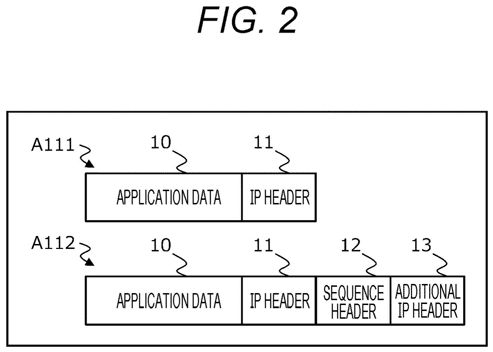

FIG. 2 is a diagram for describing the redundancy of the packet A111, and illustrates configurations of the packets A111 and A112.

As illustrated in FIG. 2, the packet A111 includes application data 10 and an IP header 11. The application data 10 is data of the communication application unit A101. The IP header 11 includes the IP address α1 of the virtual network interface A121 of the terminal A as the IP address of the source, and includes the IP address of the virtual network interface B121 of the terminal B as an IP address of the destination.

Meanwhile, the packet A112 includes a sequence header 12 and an additional IP header 13 in addition to the application data 10 and the IP header 11. The sequence header 12 includes a sequence number that defines an order of the packet. The sequence number is managed for each combination of the source and the destination, and the same sequence number is assigned to the plurality of redundant packets A112 generated from the same packet A111. The additional IP header 13 includes an IP address of an NIC corresponding to the packet A112 in the own terminal A and an IP address of an NIC of the terminal B corresponding to the NIC. The NICs B151 to B15n of the terminal B have IP addresses B1 to Bn, respectively.

The sequence header 12 and the additional IP header 13 are added to the packet A111 by the encapsulating unit A133. Hereinafter, processing of adding the sequence header 12 and the additional IP header 13 to the packet A111 to make the packet A111 redundant in the encapsulating unit A133 may be referred to as encapsulation.

The description returns to FIG. 1. The decapsulating unit A134 receives, from the NICs A151 to A15n, the packets B112, which are external device packets transmitted from the terminal B via the available paths. In a case where there are a plurality of packets B112 including the same sequence number, the decapsulating unit A134 leaves only a packet received earliest among the plurality of packets B112 and discards the other packets.

The decapsulating unit B131 sends a packet B114, which is a reception packet subjected to decapsulation for deleting the sequence header and the IP header from the received packet B112, to the communication application unit A101. Specifically, the packet B114 transmitted from the decapsulating unit B131 is routed to the virtual network interface A121 of the own terminal A by the routing table A122. Then, the packet B114 routed to the virtual network interface A121 is captured by the communication application unit A101.

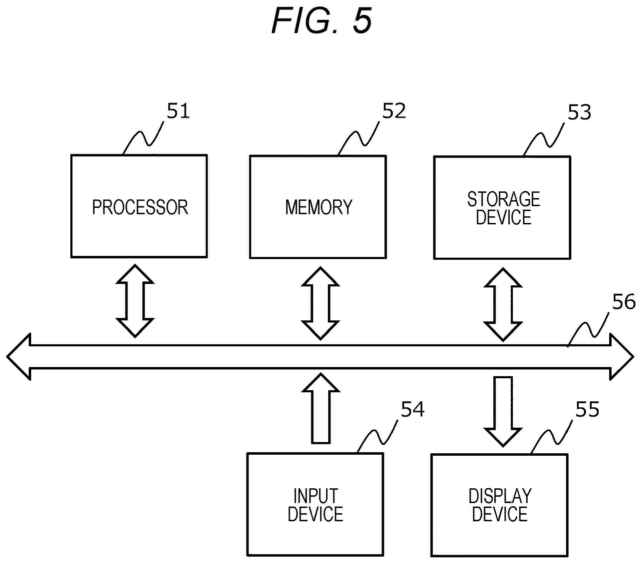

Furthermore, the decapsulating unit B131 may detect a packet loss, inversion of packet arrival order, and the like based on the sequence number in the packet B112. In a case where the inversion of the packet arrival order is detected, the decapsulating unit B131 may correct the packet arrival order by temporarily saving the packets in a memory 52 (see FIG. 5) or the like, rearranging the packets in a correct order, and sending the rearranged packets to the communication application unit A101.

In the above description, the configuration of the terminal A has been described, and the terminal B also has a similar configuration as described above, and thus, the terminals A and B can communicate with each other. However, the terminal A may be a transmission side, and the terminal B may be a reception side. Although the number of terminals is one for each of the transmission side and the reception side in the figure, the number of terminals can be increased or decreased to an arbitrary number. Furthermore, the encapsulating unit A133 or the like may have a packet encryption function, an acknowledgement-based communication function, a retransmission control function according to a protocol such as transmission control protocol (TCP), a teaming function, and the like.

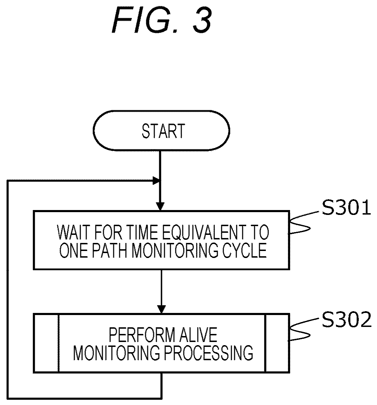

FIG. 3 is a flowchart for describing an example of path management processing performed by the path management unit A132.

In the path management processing, the path management unit A132 waits for a time equivalent to one predetermined path monitoring cycle (step S301). When the time equivalent to one cycle has elapsed, the path management unit A132 performs alive checking processing of checking whether or not the communication paths 1 to n are available (step S302), and then returns to the processing of step S301.

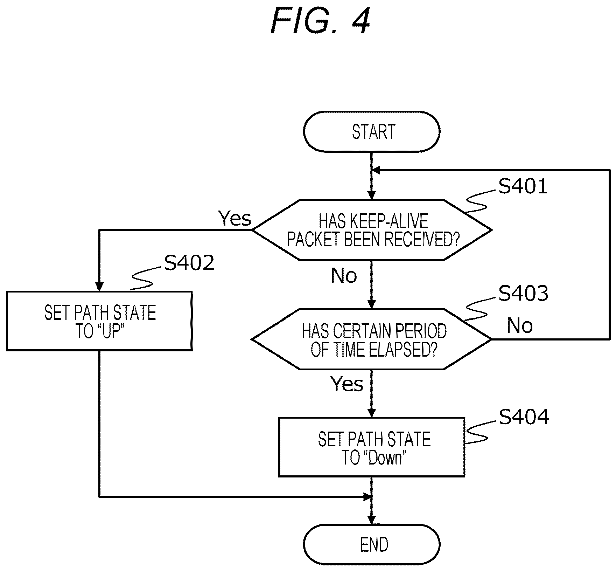

FIG. 4 is a flowchart for describing an example of the alive checking processing of step S302 of FIG. 3. The alive checking processing is performed for each of the communication paths 1 to n.

In the alive checking processing, the path management unit A132 checks whether or not a keep-alive packet corresponding to a target communication path has been received from the terminal B (step S401).

In a case where the keep-alive packet has been received (step S401: Yes), the path management unit A132 determines that the target communication path is available, sets "Up" as the path state of the target communication path in the path management table A141 (step S402), and ends the processing.

On the other hand, in a case where the keep-alive packet has not been received (step S401: No), the path management unit A132 determines whether or not a certain period of time has elapsed since the start of the alive checking processing (step S403).

In a case where the certain period of time has elapsed (step S403: Yes), the path management unit A132 determines that the target communication path is unavailable, sets "Down" as the path state of the target communication path in the path management table A141 (step S404), and ends the processing. On the other hand, in a case where the certain period of time has not elapsed (step S403: No), the path management unit A132 returns to the processing of step S401.

FIG. 5 is a diagram illustrating an example of a hardware configuration of the terminal A. As illustrated in FIG. 5, the terminal A includes a processor 51, the memory 52, a storage device 53, an input device 54, and a display device 55, which are connected via a bus 56. Note that the terminal B can be implemented by a device having a hardware configuration equivalent to that of the terminal A.

The storage device 53 is a device that records data in a writable and readable manner, and records various types of information. For example, the storage device 53 records a program that defines an operation of the processor 51, the routing table A122, the path management table A141, and the destination/source correspondence table A142. The processor 51 reads the program recorded in the storage device 53 into the memory 52, and performs processing according to the program by using the memory 52. The respective units (the communication application unit A101, the virtual network interface A121, the routing/IP address setting unit A131, the path management unit A132, the encapsulating unit A133, and the decapsulating unit A134) of the terminal A illustrated in FIG. 1 are implemented by the processor 51. The input device 54 is a device to which various types of information are input from a user of the terminal A, an external device (not illustrated), and the like, and the information is used for processing in the processor 51. The display device 55 is a device that displays various types of information.

As described above, according to the present embodiment, the processor 51 executes the application to implement the communication application unit A101 that sends the packet A111 addressed to the terminal B. In addition, the processor executes the middleware to implement the redundancy control unit that generates the plurality of packets A112 respectively corresponding to the plurality of communication paths 1 to n to make the packet A111 sent from the application unit redundant and transmits the respective packets A112 to the terminal B via the plurality of communication paths 1 to n. Therefore, the packet A111 can be made redundant in the terminal A, so that it is possible to make the packet A111 redundant while suppressing an increase in the number of devices. In addition, since the packet A111 is made redundant by the middleware, the packet A111 can be made redundant in the terminal A without changing the application. Therefore, it is possible to ensure high reliability of communication used for remote work or the like of a device located in a place where it is difficult to install a relay device, such as a narrow place where a person cannot stand. In addition, it is also possible to reduce the number of places where a failure may occur and to achieve cost reduction.

Furthermore, in the present embodiment, the redundancy control unit captures the packet A111 transmitted from the communication application unit A101 and routed to the virtual network interface A121 and makes the packet A111 redundant. Therefore, the packet A111 can be accurately delivered to the redundancy control unit.

Further, in the present embodiment, the redundancy control unit makes the packet A111 redundant by generating, as the packet A112, an encapsulation packet in which the additional IP header including the IP address of the NIC and the IP address of the terminal B corresponding to the NIC and the sequence header including the sequence number indicating the order of the packet A111 are added to the packet A111 for each NIC. In this case, the packet A111 can be made redundant more appropriately.

Furthermore, in the present embodiment, the sequence number is assigned for each combination of the source and the destination of the packet A111. Therefore, it is possible to more appropriately assign the sequence number.

Further, in the present embodiment, the redundancy control unit sends B113 obtained by deleting the additional IP header and the sequence header from the packet B111 from the terminal B to the communication application unit A101. Therefore, it is possible to receive a redundant packet from an external device without changing the communication application.

In the present embodiment, the redundancy control unit discards packets other than the packet B112 received earliest among the plurality of packets B112 received by the respective NICs A151 to 15n. In this case, it is possible to suppress a decrease in communication speed while ensuring high reliability by redundancy.

In the present embodiment, the routing/IP address setting unit A131 routes the packet B114 sent from the redundancy control unit to the application unit A101 via the virtual network interface A121. Therefore, the packet B114 can be accurately delivered to the communication application unit A101.

Furthermore, in the present embodiment, the redundancy control unit checks whether or not each of the communication paths 1 to n is available, and generates the packets A112 corresponding to the respective available communication paths 1 to n to make the packet A111 redundant. In this case, it is possible to efficiently implement the redundancy of the packet A111.

The above-described embodiments of the present disclosure are examples for describing the present disclosure, and are not intended to limit the scope of the present disclosure only to those embodiments. Those skilled in the art can implement the present disclosure in various other aspects without departing from the scope of the present disclosure.

### Reference Signs List

1 to n communication path
10 application data
11 IP header
12 sequence header
13 additional IP header
51 processor
52 memory
53 storage device
54 input device
55 display device
56 bus
A, B terminal
A101, B101 communication application unit
A121, B121 virtual network interface
A131, B131 routing/IP address setting unit
A132, B132 path management unit
A133, B133 encapsulating unit
A134, B134 decapsulating unit

## Claims

1. A communication device communicably connected to an external device via a plurality of communication paths, the communication device comprising:
a memory; and
a processor,
wherein the memory records an application and middleware,
the processor executes the application to implement an application unit that sends a packet addressed to the external device, and
the processor executes the middleware to implement a redundancy control unit that generates a plurality of transmission packets respectively corresponding to the plurality of communication paths to make the packet sent from the application unit redundant and sends the respective transmission packets to the external device via the plurality of communication paths.

2. The communication device according to claim 1, further comprising:
a virtual network interface; and
a routing setting unit that routes the packet sent from the application unit to the virtual network interface,
wherein the redundancy control unit captures the packet routed to the virtual network interface and makes the packet redundant.

3. The communication device according to claim 1, further comprising a plurality of network interface cards (NIC) respectively corresponding to the plurality of communication paths,
wherein the redundancy control unit makes the packet redundant by generating, as the transmission packet, an encapsulation packet in which an additional IP header including an IP address of the NIC and an IP address of the external device corresponding to the NIC and a sequence header including a sequence number indicating an order of the packet are added to the packet for each NIC.

4. The communication device according to claim 3, wherein the sequence number is assigned to each combination of a source and a destination of the packet.

5. The communication device according to claim 3, wherein
each of the plurality of NICs receives an external device packet which is the transmission packet of the external device, and
the redundancy control unit sends, to the application unit, a reception packet obtained by deleting the additional IP header and the sequence header from the external device packet.

6. The communication device according to claim 5, wherein the redundancy control unit discards external device packets other than an external device packet received earliest among a plurality of the external device packets received by each of the plurality of NICs.

7. The communication device according to claim 1, further comprising:
a virtual network interface; and
a routing setting unit that routes a reception packet sent from the redundancy control unit to the application unit via the virtual network interface.

8. The communication device according to claim 1, wherein the redundancy control unit checks whether or not each of the plurality of communication paths is available, and generates a plurality of transmission packets respectively corresponding to available communication paths among the plurality of communication paths to make the packet redundant.

9. A communication method executed by a communication device communicably connected to an external device via a plurality of communication paths, the communication device including a memory and a processor, the memory recording an application and middleware, the communication method comprising:
executing, by the processor, the application to implement an application unit that sends a packet addressed to the external device; and
executing, by the processor, the middleware to implement a redundancy control unit that generates a plurality of redundant transmission packets respectively corresponding to the plurality of communication paths from the packet sent from the application unit and sends the respective transmission packets to the external device via the plurality of communication paths.
